# EUROPEAN PATENT APPLICATION

(11) **EP 3 835 277 A1**
(43) Date of publication of application: **16.06.2021**
(21) Application number: 19846829.0
(22) Date of filing: 02.07.2019
(51) Int. Cl.: C03C 27/12, B32B 17/10, B32B 27/30, B60J 1/00, C08F 20/10

(54) **LAMINATED GLASS INTERLAYER, AND LAMINATED GLASS**

(30) Priority: 09.08.2018 JP 2018150891
(71) Applicant: SEKISUI CHEMICAL CO., LTD., Osaka-shi Osaka 530-8565 (JP)
(72) Inventor: ISHIKAWA, Yuki, Mishima-gun, Osaka 618-0021 (JP); IWAMOTO, Tatsuya, Kouka-shi, Shiga 528-8585 (JP); KAWADA, Shinji, Mishima-gun, Osaka 618-0021 (JP)
(74) Representative: Ter Meer Steinmeister & Partner
(86) International application number: PCT/JP2019/026320
(87) International publication number: WO 2020/031558

(57) **Abstract**

Provided is an interlayer film for laminated glass capable of enhancing the adhesive force between a layer containing a (meth)acryloyl polymer, and an adherend arranged on the layer, and enhancing the sound insulating property of the laminated glass. An interlayer film for laminated glass according to the present invention has a one-layer or two or more-layer structure, the interlayer film includes a first layer containing a (meth)acryloyl polymer prepared by polymerizing polymerization components including at least one kind of cyclic skeleton-containing (meth)acryloyl monomer selected from the group consisting of a (meth)acryloyl monomer having an aromatic skeleton, a (meth)acryloyl monomer having an alicyclic skeleton and a (meth)acryloyl monomer having a cyclic ether skeleton, and a content of the cyclic skeleton-containing (meth)acryloyl monomer is 50% by weight or more in 100% by weight of the polymerization components.

## Description

### TECHNICAL FIELD

The present invention relates to an interlayer film for laminated glass which is used for obtaining laminated glass. Moreover, the present invention relates to a laminated glass prepared with the interlayer film for laminated glass.

### BACKGROUND ART

Since laminated glass generally generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between a pair of glass plates.

Examples of the interlayer film for laminated glass include a single-layered interlayer film having a one-layer structure and a multi-layered interlayer film having a two or more-layer structure.

The following Patent Document 1 discloses a photocurable resin composition for interlayer film of laminated glass containing a (meth)acrylic polymer, a (meth)acrylic monomer, and a photopolymerization initiator. In Examples of the Patent Document 1, a (meth)acrylic polymer prepared by polymerizing polymerization components including only a (meth)acrylic monomer not having a cyclic skeleton is simply used. While a (meth)acrylic polymer prepared by polymerizing polymerization components including a (meth)acrylic monomer having a cyclic skeleton (dicyclopentenyloxyethyl acrylate) is used in Comparative Example 1-3 and Comparative Example 2-3 of the Patent Document 1, the mixing amount of the (meth)acrylic monomer having a cyclic skeleton is less than 50% by weight in 100% by weight of the polymerization components.

### Related Art Documents

### Patent Document

Patent Document 1: WO2017/209013A1

### SUMMARY OF THE INVENTION

### PROBLEMS TO BE SOLVED BY THE INVENTION

In a conventional interlayer film as described in Patent Document 1, it is sometimes difficult to sufficiently enhance the sound insulating property.

In a conventional interlayer film, the adhesive force between layers is sometimes weak when the interlayer film is a multilayer film. In a conventional interlayer film, the adhesive force between the interlayer film and a lamination glass member is sometimes weak. In particular, when the interlayer film has a layer containing a (meth) acrylic polymer, the adhesive force between the layer containing a (meth)acrylic polymer, and an adherend such as a resin layer and a glass member arranged on the layer is prone to decrease. Accordingly, the sound insulating property of the laminated glass is prone to decrease.

It is an object of the present invention to provide an interlayer film for laminated glass capable of enhancing the adhesive force between a layer containing a (meth)acryloyl polymer, and an adherend arranged on the layer, and significantly enhancing the sound insulating property of the laminated glass. Moreover, the present invention is also aimed at providing laminated glass prepared with the above-mentioned interlayer film for laminated glass.

### MEANS FOR SOLVING THE PROBLEMS

According to a broad aspect of the present invention, there is provided an interlayer film for laminated glass (in the description, "interlayer film for laminated glass" is sometimes abbreviated as "interlayer film") having a one-layer or two or more-layer structure, the interlayer film comprising a first layer containing a (meth)acryloyl polymer prepared by polymerizing polymerization components including at least one kind of cyclic skeleton-containing (meth)acryloyl monomer selected from the group consisting of a (meth)acryloyl monomer having an aromatic skeleton, a (meth)acryloyl monomer having an alicyclic skeleton and a (meth)acryloyl monomer having a cyclic ether skeleton, the interlayer film having a content of the cyclic skeleton-containing (meth)acryloyl monomer of 50% by weight or more in 100% by weight of the polymerization components.

In a specific aspect of the interlayer film according to the present invention, the polymerization components include at least two kinds of cyclic skeleton-containing (meth)acryloyl monomers selected from the group consisting of the (meth)acryloyl monomer having an aromatic skeleton, the (meth)acryloyl monomer having an alicyclic skeleton, and the (meth)acryloyl monomer having a cyclic ether skeleton.

In a specific aspect of the interlayer film according to the present invention, the polymerization components include at least one kind of cyclic skeleton-containing (meth)acryloyl monomer selected from the group consisting of the (meth)acryloyl monomer having an alicyclic skeleton, and the (meth)acryloyl monomer having a cyclic ether skeleton.

In a specific aspect of the interlayer film according to the present invention, the first layer contains a plasticizer.

In a specific aspect of the interlayer film according to the present invention, the interlayer film includes a second layer, and the second layer is layered on a first surface of the first layer.

In a specific aspect of the interlayer film according to the present invention, the second layer contains a thermoplastic resin.

In a specific aspect of the interlayer film according to the present invention, the second layer contains a plasticizer.

In a specific aspect of the interlayer film according to the present invention, the interlayer film includes a third layer, and the third layer is layered on a second surface opposite to the first layer of the first layer.

In a specific aspect of the interlayer film according to the present invention, the third layer contains a thermoplastic resin.

In a specific aspect of the interlayer film according to the present invention, the third layer contains a plasticizer.

According to a broad aspect of the present invention, there is provided a laminated glass including a first lamination glass member, a second lamination glass member, and the above-described interlayer film for laminated glass, the interlayer film for laminated glass being arranged between the first lamination glass member and the second lamination glass member.

### EFFECT OF THE INVENTION

The interlayer film for laminated glass according to the present invention is an interlayer film for laminated glass having a one-layer or two or more-layer structure. The interlayer film for laminated glass according to the present invention includes a first layer containing a (meth)acryloyl polymer prepared by polymerizing polymerization components including a cyclic skeleton-containing (meth)acryloyl monomer. In the interlayer film for laminated glass according to the present invention, the cyclic skeleton-containing (meth)acryloyl monomer is at least one kind selected from the group consisting of a (meth)acryloyl monomer having an aromatic skeleton, a (meth)acryloyl monomer having an alicyclic skeleton and a (meth)acryloyl monomer having a cyclic ether skeleton. In the interlayer film for laminated glass according to the present invention, a content of the cyclic skeleton-containing (meth)acryloyl monomer is 50% by weight or more in 100% by weight of the polymerization components. In the interlayer film for laminated glass according to the present invention, since the above configuration is provided, it is possible to enhance the adhesive force between a layer containing a (meth)acryloyl polymer, and an adherend arranged on the layer, and significantly enhance the sound insulating property of the laminated glass.

### BRIEF DESCRIPTION OF DRAWINGS

[Fig. 1] Fig. 1 is a sectional view schematically showing an interlayer film for laminated glass in accordance with a first embodiment of the present invention.
[Fig. 2] Fig. 2 is a sectional view schematically showing an interlayer film for laminated glass in accordance with a second embodiment of the present invention.
[Fig. 3] Fig. 3 is a sectional view schematically showing an example of laminated glass prepared with the interlayer film for laminated glass shown in Fig. 1.
[Fig. 4] Fig. 4 is a sectional view schematically showing an example of laminated glass prepared with the interlayer film for laminated glass shown in Fig. 2.

### MODES FOR CARRYING OUT THE INVENTION

Hereinafter, the details of the present invention will be described.

### (Interlayer film for laminated glass)

The interlayer film for laminated glass according to the present invention (hereinafter, sometimes described as interlayer film) has a one-layer structure or a two or more-layer structure. The interlayer film according to the present invention may have a one-layer structure and may have a two or more-layer structure. The interlayer film according to the present invention may have a two-layer structure, may have a three-layer structure, and may have a three or more-layer structure.

The interlayer film includes a first layer containing a (meth)acryloyl polymer prepared by polymerizing polymerization components including at least one kind of cyclic skeleton-containing (meth)acryloyl monomer selected from the group consisting of a (meth)acryloyl monomer having an aromatic skeleton, a (meth)acryloyl monomer having an alicyclic skeleton, and a (meth)acryloyl monomer having a cyclic ether skeleton. Each of the aromatic skeleton, the alicyclic skeleton, and the cyclic ether skeleton is a cyclic skeleton.

Hereinafter, "at least one kind of cyclic skeleton-containing (meth)acryloyl monomer selected from the group consisting of a (meth)acryloyl monomer having an aromatic skeleton, a (meth)acryloyl monomer having an alicyclic skeleton, and a (meth)acryloyl monomer having a cyclic ether skeleton" is sometimes described as "cyclic skeleton-containing (meth)acryloyl monomer A".

In the interlayer film according to the present invention, a content of the cyclic skeleton-containing (meth)acryloyl monomer A is 50% by weight or more in 100% by weight of the polymerization components.

In the interlayer film according to the present invention, since the above configuration is provided, an interlayer film for laminated glass capable of enhancing the adhesive force between a layer containing a (meth)acryloyl polymer, and an adherend arranged on the layer, and significantly enhancing the sound insulating property of the laminated glass is provided.

When the interlayer film according to the present invention is a single-layered interlayer film having a one-layer structure having only a first layer, a lamination glass member is arranged on the first layer. In this case, since the interlayer film according to the present invention is provided with the above configuration, it is possible to enhance the adhesivity between the first layer (interlayer film) and the lamination glass member.

From the viewpoint of effectively enhancing the sound insulating property, the interlayer film according to the present invention may include a first layer, and a second layer arranged on a first surface side of the first layer. In this case, the first layer is a layer containing a (meth)acryloyl polymer.

From the viewpoint of effectively enhancing the sound insulating property, the interlayer film according to the present invention may include a first layer, a second layer arranged on a first surface side of the first layer, and a third layer arranged on a second surface side opposite to the first surface side of the first layer. In this case, the first layer is a layer containing a (meth)acryloyl polymer.

When the interlayer film according to the present invention is a multi-layered interlayer film having a two or more-layer structure, it is possible to enhance the adhesivity between the first layer, and the adherend arranged on the first layer (for example, a second layer, a third layer or a lamination glass member) because the interlayer film according to the present invention is provided with the above configuration.

Hereinafter, specific embodiments of the present invention will be described with reference to the drawings.

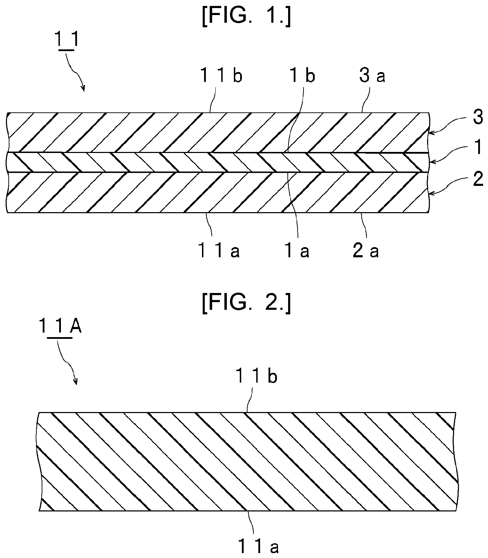

Fig. 1 is a sectional view schematically showing an interlayer film for laminated glass in accordance with a first embodiment of the present invention.

An interlayer film 11 shown in Fig. 1 is a multi-layered interlayer film having a two or more-layer structure. The interlayer film 11 is used for obtaining laminated glass. The interlayer film 11 is an interlayer film for laminated glass. The interlayer film 11 is provided with a first layer 1, a second layer 2 and a third layer 3. The second layer 2 is arranged on a first surface 1a side of the first layer 1 to be layered thereon. The third layer 3 is arranged on a second surface 1b side opposite to the first surface 1a of the first layer 1 to be layered thereon. The first layer 1 is an intermediate layer. Each of the second layer 2 and the third layer 3 is a protective layer and is a surface layer in the present embodiment. The first layer 1 is arranged between the second layer 2 and the third layer 3 to be sandwiched therebetween. Accordingly, the interlayer film 11 has a multilayer structure (second layer 2/first layer 1/third layer 3) in which the second layer 2, the first layer 1, and the third layer 3 are layered in this order.

In the interlayer film 11, the first layer 1 contains a (meth)acryloyl polymer.

In this connection, other layers may be arranged between the second layer 2 and the first layer 1 and between the first layer 1 and the third layer 3, respectively. A fourth layer (other layer) may be arranged between the second layer 2 and the first layer 1. A fifth layer (other layer) may be arranged between the first layer 1 and the third layer 3. It is preferred that the second layer 2 and the first layer 1, and the first layer 1 and the third layer 3 be directly layered. Examples of other layers include an adhesive layer, and a layer containing polyethylene terephthalate and the like.

Fig. 2 is a sectional view schematically showing an interlayer film for laminated glass in accordance with a second embodiment of the present invention.

An interlayer film 11A shown in Fig. 2 is a single-layered interlayer film having a one-layer structure. The interlayer film 11A is a first layer. The interlayer film 11A is used for obtaining laminated glass. The interlayer film 11A is an interlayer film for laminated glass.

In the interlayer film 11A, the interlayer film 11A per se is a layer containing a (meth)acryloyl polymer.

Hereinafter, details of the interlayer film according to the present invention, the first layer, the second layer, and the third layer, and details of each ingredient contained in the interlayer film according to the present invention, the first layer, the second layer and the third layer will be specifically described.

### ((Meth)acryloyl polymer)

The interlayer film according to the present invention contains a (meth)acryloyl polymer. The first layer contains a (meth)acryloyl polymer. One kind of the (meth)acryloyl polymer may be used alone, and two or more kinds thereof may be used in combination.

The (meth)acryloyl polymer is a polymer prepared by polymerizing polymerization components including at least one kind of cyclic skeleton-containing (meth)acryloyl monomer selected from the group consisting of a (meth)acryloyl monomer having an aromatic skeleton, a (meth)acryloyl monomer having an alicyclic skeleton, and a (meth)acryloyl monomer having a cyclic ether skeleton.

Therefore, the (meth)acryloyl polymer has a structural unit derived from at least one kind of cyclic skeleton-containing (meth)acryloyl monomer selected from the group consisting of a (meth)acryloyl monomer having an aromatic skeleton, a (meth)acryloyl monomer having an alicyclic skeleton, and a (meth)acryloyl monomer having a cyclic ether skeleton.

The alicyclic skeleton may be a saturated alicyclic skeleton not having a double bond, and may be an unsaturated alicyclic skeleton having a double bond. The number of atoms constituting the alicyclic skeleton is preferably 5 or more, more preferably 7 or more, and is preferably 100 or less, more preferably 90 or less.

The cyclic ether skeleton may be a saturated cyclic ether skeleton not having a double bond, and may be an unsaturated cyclic ether skeleton having a double bond. The number of atoms constituting the cyclic ether skeleton is preferably 10 or more, more preferably 12 or more, and is preferably 100 or less, more preferably 90 or less. From the viewpoint of enhancing the stability of the interlayer film, it is preferred that the cyclic ether skeleton be not an epoxy group.

The polymerization components may include a (meth)acryloyl monomer having an aromatic skeleton, may include a (meth)acryloyl monomer having an alicyclic skeleton, and may include a (meth)acryloyl monomer having a cyclic ether skeleton.

The (meth) acryloyl polymer may have a structural unit derived from a (meth)acryloyl monomer having an aromatic skeleton, may have a structural unit derived from a (meth)acryloyl monomer having an alicyclic skeleton, and may have a structural unit derived from a (meth)acryloyl monomer having a cyclic ether skeleton.

From the viewpoint of further exerting the effect of the present invention, it is preferred that the polymerization components include at least two kinds of cyclic skeleton-containing (meth)acryloyl monomers selected from the group consisting of a (meth)acryloyl monomer having an aromatic skeleton, a (meth)acryloyl monomer having an alicyclic skeleton, and a (meth)acryloyl monomer having a cyclic ether skeleton.

Therefore, it is preferred that the (meth)acryloyl polymer have a structural unit derived from at least two kinds of cyclic skeleton-containing (meth)acryloyl monomers selected from the group consisting of a (meth)acryloyl monomer having an aromatic skeleton, a (meth)acryloyl monomer having an alicyclic skeleton, and a (meth)acryloyl monomer having a cyclic ether skeleton. By this preferred configuration, the effect of the present invention is further exerted.

From the viewpoint of further exerting the effect of the present invention, it is preferred that the polymerization components include a structural unit derived from at least one kind of cyclic skeleton-containing (meth)acryloyl monomer selected from the group consisting of a (meth)acryloyl monomer having an alicyclic skeleton, and a (meth)acryloyl monomer having a cyclic ether skeleton.

From the viewpoint of further exerting the effect of the present invention, it is preferred that the polymerization components include a (meth)acryloyl monomer having an aromatic skeleton, and a (meth)acryloyl monomer having an alicyclic skeleton. That is, it is preferred that the (meth)acryloyl polymer have a structural unit derived from a (meth)acryloyl monomer having an aromatic skeleton, and a structural unit derived from a (meth)acryloyl monomer having an alicyclic skeleton.

From the viewpoint of further exerting the effect of the present invention, it is preferred that the polymerization components include a (meth)acryloyl monomer having an aromatic skeleton, and a (meth)acryloyl monomer having a cyclic ether skeleton. That is, it is preferred that the (meth)acryloyl polymer have a structural unit derived from a (meth)acryloyl monomer having an aromatic skeleton, and a structural unit derived from a (meth)acryloyl monomer having a cyclic ether skeleton.

From the viewpoint of further exerting the effect of the present invention, it is preferred that the polymerization components include a (meth)acryloyl monomer having an alicyclic skeleton, and a (meth)acryloyl monomer having a cyclic ether skeleton. That is, it is preferred that the (meth)acryloyl polymer have a structural unit derived from a (meth)acryloyl monomer having an alicyclic skeleton, and a structural unit derived from a (meth)acryloyl monomer having a cyclic ether skeleton.

From the viewpoint of still further exerting the effect of the present invention, it is preferred that the polymerization components include a (meth)acryloyl monomer having an aromatic skeleton, a (meth)acryloyl monomer having an alicyclic skeleton, and a (meth)acryloyl monomer having a cyclic ether skeleton. That is, it is preferred that the (meth)acryloyl polymer have a structural unit derived from a (meth)acryloyl monomer having an aromatic skeleton, a structural unit derived from a (meth)acryloyl monomer having an alicyclic skeleton, and a structural unit derived from a (meth)acryloyl monomer having a cyclic ether skeleton.

The weight ratio of the content of the (meth)acryloyl monomer having an aromatic skeleton in the polymerization components to the content of the cyclic skeleton-containing (meth)acryloyl monomer A in the polymerization components (the content of (meth)acryloyl monomer having an aromatic skeleton/the content of cyclic skeleton-containing (meth)acryloyl monomer A) is defined as a weight ratio A. The weight ratio A is preferably 0.02 or more, more preferably 0.05 or more, and is preferably 0.3 or less, more preferably 0.2 or less. When the weight ratio A is the above lower limit or more and the above upper limit or less, the effect of the present invention is further exerted.

A weight ratio of the content of the (meth)acryloyl monomer having an alicyclic skeleton in the polymerization components to the content of the cyclic skeleton-containing (meth)acryloyl monomer A in the polymerization components (the content of (meth)acryloyl monomer having an alicyclic skeleton/the content of cyclic skeleton-containing (meth)acryloyl monomer A) is defined as a weight ratio B. The weight ratio B is preferably 0.15 or more, more preferably 0.3 or more, and is preferably 0.95 or less, more preferably 0.9 or less. When the weight ratio B is the above lower limit or more and the above upper limit or less, the effect of the present invention is further exerted.

A weight ratio of the content of the (meth)acryloyl monomer having a cyclic ether skeleton in the polymerization components to the content of the cyclic skeleton-containing (meth)acryloyl monomer A in the polymerization components (the content of (meth)acryloyl monomer having a cyclic ether skeleton/the content of cyclic skeleton-containing (meth)acryloyl monomer A) is defined as a weight ratio C. The weight ratio C is preferably 0.05 or more, more preferably 0.1 or more, and is preferably 0.6 or less, more preferably 0.5 or less. When the weight ratio C is the above lower limit or more and the above upper limit or less, the effect of the present invention is further exerted.

The content of the cyclic skeleton-containing (meth)acryloyl monomer A in the polymerization components in the weight ratio A, the weight ratio B and the weight ratio C is a total content of the (meth)acryloyl monomer having an aromatic skeleton, the (meth)acryloyl monomer having an alicyclic skeleton, and the (meth)acryloyl monomer having a cyclic ether skeleton in the polymerization components.

In 100% by weight of the polymerization components, the content of the cyclic skeleton-containing (meth)acryloyl monomer A (the total content of the (meth)acryloyl monomer having an aromatic skeleton, the (meth)acryloyl monomer having an alicyclic skeleton, and the (meth)acryloyl monomer having a cyclic ether skeleton) is 50% by weight or more. When the content of the cyclic skeleton-containing (meth)acryloyl monomer A is less than 50% by weight, the sound insulating property can deteriorate, and the adhesive force with the adherend can deteriorate.

In 100% by weight of the polymerization components, the content of the cyclic skeleton-containing (meth)acryloyl monomer A is preferably 55% by weight or more, more preferably 60% by weight or more, still more preferably 70% by weight or more, further preferably 80% by weight or more, especially preferably 90% by weight or more, most preferably 100% by weight (the whole amount). When the content of the cyclic skeleton-containing (meth)acryloyl monomer A is the above lower limit or more, it is possible to further exert the effect of the present invention.

By analyzing the interlayer film in the following manner, it is possible to know the kind and the content of the (meth)acryloyl monomer in the polymerization components.

In the case of a multilayer interlayer film, after dipping the multilayer interlayer film in liquid nitrogen, the first layer is delaminated from the second layer and the third layer to obtain the first layer. The obtained first layer is separated into a high molecular weight component and a low molecular weight component by liquid chromatography, and the obtained high molecular weight component is dissolved in deuteriodimethylsulfoxide or deuteriochloroform and analyzed by ¹³C-NMR, ¹H-NMR.

### <(Meth)acryloyl monomer having an aromatic skeleton>

Examples of the (meth)acryloyl monomer having an aromatic skeleton include benzyl acrylate, phenoxyethyl acrylate, phenoxypolyethyleneglycol acrylate, and hydroxyphenoxypropyl acrylate. One kind of the (meth)acryloyl monomer having an aromatic skeleton may be used alone, and two or more kinds thereof may be used in combination.

From the viewpoint of further enhancing the sound insulating property, it is preferred that the (meth)acryloyl monomer having an aromatic skeleton be a benzyl acrylate.

The (meth)acryloyl monomer having an aromatic skeleton is preferably such a monomer that a homopolymer of the (meth)acryloyl monomer having an aromatic skeleton has a glass transition temperature of 10°C or more and 150°C or less.

As a method for measuring the glass transition temperature, a method of measuring viscoelasticity by using "ARES-G2" available from TA Instruments directly after keeping the resin film formed of the homopolymer of the (meth)acryloyl monomer having an aromatic skeleton for 12 hours in an environment of room temperature of 23 ± 2°C and a humidity of 25 ± 5% can be recited. It is preferred to use a parallel plate with a diameter of 8 mm as a jig, and measure the glass transition temperature under the condition in which the temperature is decreased from 200°C to -50°C at a temperature decreasing rate of 3°C/min. and under the condition of a frequency of 1 Hz and a strain of 1%.

In 100% by weight of the polymerization components, the content of the (meth)acryloyl monomer having an aromatic skeleton is preferably 2% by weight or more, more preferably 3% by weight or more, further preferably 4% by weight or more, especially preferably 5% by weight or more. In 100% by weight of the polymerization components, the content of the (meth)acryloyl monomer having an aromatic skeleton is preferably 50% by weight or less, more preferably 40% by weight or less, further preferably 30% by weight or less, especially preferably 20% by weight or less. When the content of the (meth)acryloyl monomer having an aromatic skeleton is the above lower limit or more, it is possible to further enhance the sound insulating property. When the content of the (meth)acryloyl monomer having an aromatic skeleton is the above upper limit or less, it is possible to further enhance the adhesive force with the adherend.

In 100% by weight of the (meth)acryloyl polymer, the content of the structural unit derived from the (meth)acryloyl monomer having an aromatic skeleton is preferably 2% by weight or more, more preferably 3% by weight or more, further preferably 4% by weight or more, especially preferably 5% by weight or more. In 100% by weight of the (meth)acryloyl polymer, the content of the structural unit derived from the (meth)acryloyl monomer having an aromatic skeleton is preferably 50% by weight or less, more preferably 40% by weight or less, further preferably 30% by weight or less, especially preferably 20% by weight or less. When the content of the structural unit derived from the (meth)acryloyl monomer having an aromatic skeleton is the above lower limit or more, it is possible to further enhance the sound insulating property. When the content of the structural unit derived from the (meth)acryloyl monomer having an aromatic skeleton is the above upper limit or less, it is possible to further enhance the adhesive force with the adherend.

### <(Meth)acryloyl monomer having an alicyclic skeleton>

Examples of the (meth)acryloyl monomer having an alicyclic skeleton include isobornyl acrylate, dicyclopentanyl (meth)acrylate, and cyclohexyl acrylate. One kind of the (meth)acryloyl monomer having an alicyclic skeleton may be used alone, and two or more kinds thereof may be used in combination.

From the viewpoint of further enhancing the sound insulating property, it is preferred that the (meth)acryloyl monomer having an alicyclic skeleton include isobornyl acrylate.

The (meth)acryloyl monomer having an alicyclic skeleton is preferably such a monomer that a homopolymer of the (meth)acryloyl monomer having an alicyclic skeleton has a glass transition temperature of 40°C or more and 150°C or less.

As a method for measuring the glass transition temperature, a method of measuring viscoelasticity by using "ARES-G2" available from TA Instruments directly after keeping the resin film formed of the homopolymer of the (meth)acryloyl monomer having an alicyclic skeleton for 12 hours in an environment of room temperature of 23 ± 2°C and a humidity of 25 ± 5% can be recited. It is preferred to use a parallel plate with a diameter of 8 mm as a jig, and measure the glass transition temperature under the condition in which the temperature is decreased from 200°C to -50°C at a temperature decreasing rate of 3°C/min. and under the condition of a frequency of 1 Hz and a strain of 1%.

In 100% by weight of the polymerization components, the content of the (meth)acryloyl monomer having an alicyclic skeleton is preferably 15% by weight or more, more preferably 25% by weight or more, still more preferably 35% by weight or more, further preferably 45% by weight or more, still further preferably 50% by weight or more, especially preferably 55% by weight or more. In 100% by weight of the polymerization components, the content of the (meth)acryloyl monomer having an alicyclic skeleton is preferably 90% by weight or less, more preferably 85% by weight or less, further preferably 80% by weight or less. When the content of the (meth)acryloyl monomer having an alicyclic skeleton is the above lower limit or more, it is possible to further enhance the sound insulating property. When the content of the (meth)acryloyl monomer having an alicyclic skeleton is the above upper limit or less, it is possible to further enhance the adhesive force with the adherend.

In 100% by weight of the (meth)acryloyl polymer, the content of the structural unit derived from the (meth)acryloyl monomer having an alicyclic skeleton is preferably 15% by weight or more, more preferably 25% by weight or more, still more preferably 35% by weight or more, further preferably 45% by weight or more, still further preferably 50% by weight or more, especially preferably 55% by weight or more. In 100% by weight of the (meth)acryloyl polymer, the content of the structural unit derived from the (meth)acryloyl monomer having an alicyclic skeleton is preferably 90% by weight or less, more preferably 85% by weight or less, further preferably 80% by weight or less. When the content of the structural unit derived from the (meth)acryloyl monomer having an alicyclic skeleton is the above lower limit or more, it is possible to further enhance the sound insulating property. When the content of the structural unit derived from the (meth)acryloyl monomer having an alicyclic skeleton is the above upper limit or less, it is possible to further enhance the adhesive force with the adherend.

### <(Meth)acryloyl monomer having an alicyclic skeleton>

Examples of the (meth)acryloyl monomer having a cyclic ether skeleton include glycidyl (meth)acrylate, (3-propyloxetan-3-yl)methyl (meth)acrylate, (3-ethyloxetan-3-yl)methyl (meth)acrylate, (3-butyloxetan-3-yl)methyl (meth)acrylate, (3-ethyloxetan-3-yl)ethyl (meth)acrylate, (3-ethyloxetan-3-yl)propyl (meth)acrylate, (3-ethyloxetan-3-yl)butyl (meth)acrylate, (3-ethyloxetan-3-yl)pentyl (meth)acrylate, (3-ethyloxetan-3-yl)hexyl (meth)acrylate; γ-butyrolactone (meth)acrylate, (2,2-dimethyl-1,3-dioxolan-4-yl)methyl (meth)acrylate, (2-methyl-2-ethyl-1,3-dioxolan-4-yl)methyl (meth)acrylate, (2-methyl-2-isobutyl-1,3-dioxolan-4-yl)methyl (meth)acrylate, (2-cyclohexyl-1,3-dioxolan-4-yl)methyl (meth)acrylate, cyclic trimethylolpropane formal acrylate, tetrahydrofurfuryl acrylate, and a tetrahydrofurfuryl alcohol acrylic acid multimer ester. One kind of the (meth)acryloyl monomer having a cyclic ether skeleton may be used alone, and two or more kinds thereof may be used in combination.

It is preferred that the (meth)acryloyl monomer having a cyclic ether skeleton be (2-methyl-2-ethyl-1,3-dioxolan-4-yl)methyl (meth)acrylate, cyclic trimethylolpropane formal acrylate, tetrahydrofurfuryl acrylate, or a tetrahydrofurfuryl alcohol acrylic acid multimer ester. In this case, the sound insulating property is further enhanced.

The (meth)acryloyl monomer having a cyclic ether skeleton is preferably such a monomer that a homopolymer of the (meth)acryloyl monomer having a cyclic ether skeleton has a glass transition temperature of -30°C or more and 100°C or less.

As a method for measuring the glass transition temperature, a method of measuring viscoelasticity by using "ARES-G2" available from TA Instruments directly after keeping the resin film formed of the homopolymer of the (meth)acryloyl monomer having a cyclic ether skeleton for 12 hours in an environment of room temperature of 23 ± 2°C and a humidity of 25 ± 5% can be recited. It is preferred to use a parallel plate with a diameter of 8 mm as a jig, and measure the glass transition temperature under the condition in which the temperature is decreased from 200°C to -50°C at a temperature decreasing rate of 3°C/min. and under the condition of a frequency of 1 Hz and a strain of 1%.

In 100% by weight of the polymerization components, the content of the (meth)acryloyl monomer having a cyclic ether skeleton is preferably 5% by weight or more, more preferably 10% by weight or more, further preferably 15% by weight or more. In 100% by weight of the polymerization components, the content of the (meth)acryloyl monomer having a cyclic ether skeleton is preferably 60% by weight or less, more preferably 55% by weight or less, further preferably 50% by weight or less, especially preferably 45% by weight or less. When the content of the (meth)acryloyl monomer having a cyclic ether skeleton is the above lower limit or more, it is possible to further enhance the sound insulating property. When the content of the (meth)acryloyl monomer having a cyclic ether skeleton is the above upper limit or less, it is possible to further enhance the adhesive force with the adherend.

In 100% by weight of the (meth)acryloyl polymer, the content of the structural unit derived from the (meth)acryloyl monomer having a cyclic ether skeleton is preferably 5% by weight or more, more preferably 10% by weight or more, further preferably 15% by weight or more. In 100% by weight of the (meth)acryloyl polymer, the content of the structural unit derived from the (meth)acryloyl monomer having a cyclic ether skeleton is preferably 60% by weight or less, more preferably 55% by weight or less, further preferably 50% by weight or less, especially preferably 45% by weight or less. When the content of the structural unit derived from the (meth)acryloyl monomer having a cyclic ether skeleton is the above lower limit or more, it is possible to further enhance the sound insulating property. When the content of the structural unit derived from the (meth)acryloyl monomer having a cyclic ether skeleton is the above upper limit or less, it is possible to further enhance the adhesive force with the adherend.

### <Monomer other than cyclic skeleton-containing (meth)acryloyl monomer A>

The (meth)acryloyl polymer may be a (meth)acryloyl polymer prepared by polymerizing polymerization components including the cyclic skeleton-containing (meth)acryloyl monomer A, and a monomer other than the cyclic skeleton-containing (meth)acryloyl monomer A (hereinafter, sometimes described as other monomer).

Therefore, the (meth)acryloyl polymer may have a structural unit derived from a monomer other than the cyclic skeleton-containing (meth)acryloyl monomer A.

The other monomer may be a (meth)acryloyl monomer other than the cyclic skeleton-containing (meth)acryloyl monomer A, and may be a monomer (polymerizable compound) other than (meth)acryloyl monomers. One kind of the other monomer may be used alone, and two or more kinds thereof may be used in combination.

Examples of the (meth)acryloyl monomer other than the cyclic skeleton-containing (meth)acryloyl monomer A include methyl (meth)acrylate, ethyl (meth)acrylate, propyl (meth)acrylate, butyl (meth)acrylate, acrylic acid, hydroxyethyl (meth)acrylate, hydroxypropyl (meth)acrylate, hydroxybutyl (meth)acrylate, methoxypolyethylene glycol acrylate, and acryloylmorpholine.

Examples of the polymerizable compound other than (meth)acryloyl monomers include vinyl acetate, a styrene compound, styrene, an isoprene compound, vinyl benzoate and allyl benzoate. By using such a polymerizable compound, it becomes easy to modulate the compatibility between the resin and a plasticizer and it becomes easy to modulate the rigidity when the first layer contains the plasticizer.

Other examples of the polymerizable compound other than (meth)acryloyl monomers include polyoxyethylenestyrenated propenylphenylether sulfate ester ammonium, polyoxyethylenenonylpropenylphenylether sulfate ester ammonium, polyoxyethylene-1-(allyloxymethyl)alkylether sulfate ester ammonium, polyoxyethylenestyrenated propenylphenylether, and polyoxyethylene-1-(allyloxymethyl)alkylether. By using such a polymerizable compound as a reactive surfactant, an interlayer film having high transparency can be obtained even when the (meth)acryloyl polymer is synthesized by suspension polymerization.

In 100% by weight of the polymerization components, the content of the other monomer is 50% by weight or less. In 100% by weight of the polymerization components, the content of the other monomer is preferably 45% by weight or less, more preferably 40% by weight or less, still more preferably 30% by weight or less, further preferably 20% by weight or less, especially preferably 10% by weight or less, most preferably 0% by weight (not contained).

From the viewpoint of effectively enhancing the sound insulating property, the weight average molecular weight of the (meth)acryloyl polymer is preferably 250000 or more, more preferably 300000 or more, further preferably 400000 or more, especially preferably 500000 or more. From the viewpoint of effectively increasing the transparency, the weight average molecular weight of the (meth)acryloyl polymer is preferably 2500000 or less.

The weight average molecular weight refers to a weight average molecular weight, calculated on the polystyrene equivalent basis, measured by gel permeation chromatography (GPC).

The method for synthesizing the (meth)acryloyl polymer is not particularly limited. Examples of the method for synthesizing the (meth)acryloyl polymer include solution polymerization, suspension polymerization, and UV polymerization. The method for synthesizing the (meth)acryloyl polymer may be solution polymerization, suspension polymerization, or UV polymerization.

From the viewpoint of increasing the transparency of the interlayer film, and effectively enhancing the sound insulating property in the interlayer film having increased transparency, the synthesizing method of the (meth)acryloyl polymer is preferably solution polymerization or UV polymerization. When the synthesizing method of the (meth)acryloyl polymer is suspension polymerization, the haze of the interlayer film (the haze of the laminated glass in which the aforementioned interlayer film is sandwiched between two sheets of clear glass, measured in accordance with JIS K6714) tends to be high. When the synthesizing method of the (meth)acryloyl polymer is solution polymerization or UV polymerization, the haze of the interlayer film (the haze of the laminated glass in which the aforementioned interlayer film is sandwiched between two sheets of clear glass, measured in accordance with JIS K6714) is significantly low.

Even when the synthesizing method of the (meth)acryloyl polymer is suspension polymerization, it is possible to make the haze of the interlayer film (the haze of the laminated glass in which the aforementioned interlayer film is sandwiched between two sheets of clear glass, measured in accordance with JIS K6714) low by appropriately selecting a surfactant or a dispersant. The dispersant for use in synthesizing the (meth)acryloyl polymer by suspension polymerization is preferably a high molecular dispersant that is compatible with an organic solvent, or a reactive surfactant from the viewpoint of adhesivity and transparency. When the dispersant is a high molecule, the dispersant is less likely to migrate to another layer when the interlayer film is layered, so that it is possible to suppress deterioration in interlayer adhesive force caused by bleeding of the dispersant to the layer interface or glass interface. Examples of the high molecular dispersant include a block copolymer of ethylene oxide and propylene oxide.

One exemplary method for synthesizing the (meth)acryloyl polymer by solution polymerization includes, for example, introducing a prescribed monomer and ethyl acetate into a vessel, replacing the air inside the vessel with nitrogen, and introducing azobisisobutyronitrile as a radical initiator to let the reactant polymerize at 60°C for 6 hours to obtain a copolymer.

In 100% by weight of the resin component contained in the first layer, the content of the (meth)acryloyl polymer is preferably 50% by weight or more, more preferably 70% by weight or more. When the content of the (meth)acryloyl polymer is the above lower limit or more, it is possible to further exert the effect of the present invention. In 100% by weight of the resin component contained in the first layer, the content of the (meth) acryloyl polymer may be 100% by weight (the whole amount).

The (meth)acryloyl polymer may be a thermoplastic resin. In this case, in 100% by weight of the thermoplastic resin component contained in the first layer, the content of the (meth)acryloyl polymer is preferably 50% by weight or more, more preferably 60% by weight or more. When the content of the (meth)acryloyl polymer is the above lower limit or more, it is possible to further exert the effect of the present invention. In 100% by weight of the thermoplastic resin component contained in the first layer, the content of the (meth)acryloyl polymer may be 100% by weight (the whole amount).

### (Other thermoplastic resin)

It is preferred that the interlayer film contain a thermoplastic resin. It is preferred that the interlayer film contain a polyvinyl acetal resin. The first layer may contain or need not contain a thermoplastic resin other than the (meth)acryloyl polymer (hereinafter, sometimes described as thermoplastic resin (1)). From the viewpoint of effectively enhancing the adhesivity and the penetration resistance, it is preferred that the second layer contain a thermoplastic resin (hereinafter, sometimes referred to as thermoplastic resin (2)), and it is more preferred that the second layer contain a polyvinyl acetal resin (hereinafter, sometimes described as polyvinyl acetal resin (2)). From the viewpoint of effectively enhancing the adhesivity and the penetration resistance, it is preferred that the third layer contain a thermoplastic resin (hereinafter, sometimes referred to as thermoplastic resin (3)), and it is more preferred that the third layer contain a polyvinyl acetal resin (hereinafter, sometimes described as polyvinyl acetal resin (3)).

From the viewpoint of effectively enhancing the adhesivity between the interlayer film and a lamination glass member, it is preferred that the second layer contain a thermoplastic resin other than the (meth)acryloyl polymer. From the viewpoint of effectively enhancing the adhesivity between the interlayer film and a lamination glass member, it is preferred that the third layer contain a thermoplastic resin other than the (meth)acryloyl polymer.

Examples of the thermoplastic resins (1) to (3) include a polyvinyl acetal resin, an ethylene-vinyl acetate copolymer, a polyurethane resin, a polyvinyl alcohol resin, a polyvinyl acetate, and a polyester resin. Thermoplastic resins other than these may be used as the thermoplastic resins (1) to (3).

The first layer may contain or need not contain a tackifier resin. Examples of the tackifier resin include a rosin resin, a terpene phenol resin, and a styrene resin.

When the first layer contains a tackifier resin, in 100% by weight of the total of the (meth)acryloyl polymer in the first layer, and the tackifier resin in the first layer, the content of the tackifier resin in the first layer is preferably 50% by weight or less, more preferably 40% by weight or less. When the content of the tackifier resin in the first layer is the above upper limit or less, it is possible to make the content of the (meth)acryloyl polymer that contributes to the effect of the present invention relatively large, and thus it is possible to further exert the effect of the present invention.

From the viewpoint of further exerting the effect of the present invention, it is preferred that the first layer do not contain a terpene phenol resin, and it is more preferred that the first layer do not contain a tackifier resin.

The thermoplastic resin (2) and the thermoplastic resin (3) may be the same or different from each other. One kind of each of the thermoplastic resin (2) and the thermoplastic resin (3) may be used alone, and two or more kinds thereof may be used in combination.

In 100% by weight of the thermoplastic resin in the second layer, the content of the polyvinyl acetal resin (2) is preferably 50% by weight or more, more preferably 60% by weight or more, further preferably 70% by weight or more, especially preferably 80% by weight or more, most preferably 90% by weight or more. All the thermoplastic resin in the second layer may be the polyvinyl acetal resin (2).

In 100% by weight of the thermoplastic resin in the third layer, the content of the polyvinyl acetal resin (3) is preferably 50% by weight or more, more preferably 60% by weight or more, further preferably 70% by weight or more, especially preferably 80% by weight or more, most preferably 90% by weight or more. All the thermoplastic resin in the third layer may be the polyvinyl acetal resin (3).

For example, the polyvinyl acetal resin can be produced by acetalizing polyvinyl alcohol (PVA) with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally lies within the range of 70% by mole to 99.9% by mole.

The average polymerization degree of the polyvinyl alcohol (PVA) is preferably 200 or more, more preferably 500 or more, even more preferably 1500 or more, further preferably 1600 or more, and is preferably 5000 or less, more preferably 4000 or less, further preferably 3500 or less. When the average polymerization degree is the above lower limit or more, the penetration resistance of laminated glass is further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin fall within the range of 3 to 5 and it is more preferred that the number of carbon atoms of the acetal group be 3 or 4. When the number of carbon atoms of the acetal group in the polyvinyl acetal resin is 3 or more, the glass transition temperature of the interlayer film is sufficiently lowered.

The aldehyde is not particularly limited. In general, an aldehyde with 1 to 10 carbon atoms is preferably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, and benzaldehyde. The aldehyde is preferably propionaldehyde, n-butyraldehyde, isobutyraldehyde, n-hexylaldehyde, or n-valeraldehyde, more preferably propionaldehyde, n-butyraldehyde, or isobutyraldehyde, and further preferably n-butyraldehyde. One kind of the aldehyde may be used alone, and two or more kinds thereof may be used in combination.

Each of the contents of the hydroxyl group of the polyvinyl acetal resin (2) and the polyvinyl acetal resin (3) is preferably 25% by mole or more, more preferably 28% by mole or more, further preferably 30% by mole or more. Each of the contents of the hydroxyl group of the polyvinyl acetal resin (2) and the polyvinyl acetal resin (3) is preferably 38% by mole or less, more preferably 37% by mole or less. When the content of the hydroxyl group is the above lower limit or more, the adhesive force of the interlayer film is further enhanced. When the content of the hydroxyl group is the above upper limit or less, the flexibility of the interlayer film is enhanced and the handling of the interlayer film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in conformity with JIS K6728 "Testing methods for polyvinyl butyral".

The acetylation degree of each of the polyvinyl acetal resin (2) and the polyvinyl acetal resin (3) is preferably 0.01% by mole or more, and more preferably 0.5% by mole or more and is preferably 10% by mole or less, and more preferably 2% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of each of the polyvinyl acetal resin (2) and the polyvinyl acetal resin (3) (the butyralization degree in the case of a polyvinyl butyral resin) is preferably 55% by mole or more, more preferably 60% by mole or more and is preferably 75% by mole or less, more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

It is preferred that the polyvinyl acetal resin (2) be a polyvinyl butyral resin. It is preferred that the polyvinyl acetal resin (3) be a polyvinyl butyral resin.

### (Plasticizer)

It is preferred that the interlayer film contain a plasticizer. It is preferred that the first layer (including a single-layered interlayer film) contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). By the use of the plasticizer or by using a polyvinyl acetal resin and a plasticizer together, the penetration resistance is further improved, and the adhesive force of a layer containing the polyvinyl acetal resin and the plasticizer to a lamination glass member or another layer is moderately increased. The plasticizer is not particularly limited. The plasticizer (1), the plasticizer (2) and the plasticizer (3) may be the same or different from one another. One kind of each of the plasticizer (1), the plasticizer (2) and the plasticizer (3) may be used alone, and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include a glycol ester obtained by the reaction of a glycol with a monobasic organic acid, and a diol ester obtained by the reaction of a diol with a monobasic organic acid. Examples of the glycol include triethylene glycol, tetraethylene glycol, tripropylene glycol, and the like. Examples of the diol include 1,4-butanediol, 1,6-hexanediol, and 1,8-octanediol. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include an ester compound of a polybasic organic acid and an alcohol having a linear or branched structure with 4 to 10 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dibutyl maleate, bis(2-butoxyethyl) adipate, dibutyl adipate, diisobutyl adipate, 2,2-butoxyethoxyethyl adipate, benzoic acid glycol ester, adipic acid 1,3-butyleneglycol polyester, dihexyl adipate, dioctyl adipate, hexyl cyclohexyl adipate, a mixture of heptyl adipate and nonyl adipate, diisononyl adipate, diisodecyl adipate, heptyl nonyl adipate, tributyl citrate, tributyl acetylcitrate, diethyl carbonate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

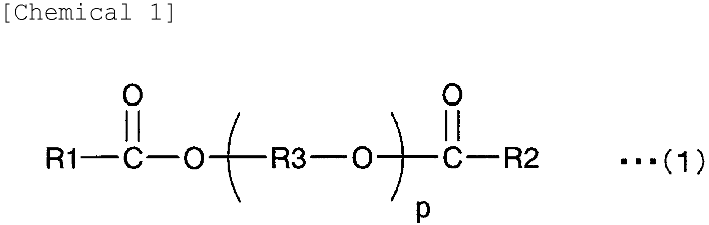

In the foregoing formula (1), R1 and R2 each represent an organic group with 2 to 10 carbon atoms, R3 represents an ethylene group, an isopropylene group or an n-propylene group, and p represents an integer of 3 to 10. It is preferred that R1 and R2 in the foregoing formula (1) each be an organic group with 4 to 10 carbon atoms.

The first layer may contain or need not contain a plasticizer. In the present invention, since the first layer contains a specific (meth)acryloyl polymer, it is possible to enhance the sound insulating property and the adhesive force even when the first layer does not contain a plasticizer. When the first layer contains a plasticizer, it is preferred that the first layer contain an organic ester plasticizer as the plasticizer.

In the above first layer, the content of the plasticizer (1) per 100 parts by weight of the (meth)acryloyl polymer is referred to as a content (1). The content (1) may be 0 parts by weight or more (including uncontained) and may be more than 0 parts by weight, and is preferably 1 part by weight or more, more preferably 5 parts by weight or more, still more preferably 10 parts by weight or more, further preferably 20 parts by weight or more, and is preferably 90 parts by weight or less, more preferably 85 parts by weight or less, further preferably 80 parts by weight or less. When the content (1) is the above lower limit or more, the flexibility of the interlayer film is enhanced and the handling of the interlayer film is facilitated. When the content (1) is the above upper limit or less, the penetration resistance of laminated glass is further enhanced.

In the second layer, the content of the plasticizer (2) per 100 parts by weight of the thermoplastic resin (2) (100 parts by weight of the polyvinyl acetal resin (2) when the thermoplastic resin (2) is the polyvinyl acetal resin (2)) is referred to as a content (2). In the third layer, the content of the plasticizer (3) per 100 parts by weight of the thermoplastic resin (3) (100 parts by weight of polyvinyl acetal resin (3) when the thermoplastic resin (3) is a polyvinyl acetal resin (3)) is referred to as a content (3). Each of the content (2) and the content (3) is preferably 10 parts by weight or more, more preferably 15 parts by weight or more, and is preferably 40 parts by weight or less, more preferably 35 parts by weight or less. When the content (2) and the content (3) are the above lower limit or more, the flexibility of the interlayer film is enhanced and the handling of the interlayer film is facilitated. When the content (2) and the content (3) are the above upper limit or less, the flexural rigidity is further enhanced.

### (Heat shielding substance)

The interlayer film may contain a heat shielding substance (heat shielding compound). The first layer may contain a heat shielding substance. The second layer may contain a heat shielding substance. The third layer may contain a heat shielding substance. One kind of the heat shielding substance may be used alone, and two or more kinds thereof may be used in combination.

It is preferred that the heat shielding substance contain at least one kind of Ingredient X among a phthalocyanine compound, a naphthalocyanine compound, and an anthracyanine compound or contain heat shielding particles. In this case, the heat shielding compound may be constituted of both of the Ingredient X and the heat shielding particles.

### Ingredient X:

It is preferred that the interlayer film include at least one kind of Ingredient X among a phthalocyanine compound, a naphthalocyanine compound, and an anthracyanine compound. It is preferred that the first layer contain the Ingredient X. It is preferred that the second layer contain the Ingredient X. It is preferred that the third layer contain the Ingredient X. The Ingredient X is a heat shielding substance. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. With regard to the interlayer film and laminated glass, from the viewpoint of still further enhancing the heat shielding properties thereof, it is preferred that the Ingredient X have a structural unit in which an oxygen atom is bonded to a vanadium atom.

In 100% by weight of the interlayer film or in 100% by weight of a layer containing the Ingredient X (a first layer, a second layer, or a third layer), the content of the Ingredient X is preferably 0.001% by weight or more, more preferably 0.005% by weight or more, further preferably 0.01% by weight or more, especially preferably 0.02% by weight or more. In 100% by weight of the interlayer film or in 100% by weight of a layer containing the Ingredient X (a first layer, a second layer, or a third layer), the content of the Ingredient X is preferably 0.2% by weight or less, more preferably 0.1% by weight or less, further preferably 0.05% by weight or less, especially preferably 0.04% by weight or less. When the content of the Ingredient X is the above lower limit or more and the above upper limit or less, the heat shielding properties are sufficiently enhanced and the visible light transmittance is sufficiently enhanced. For example, it is possible to make the visible light transmittance 70% or more.

### Heat shielding particles:

It is preferred that the interlayer film contain heat shielding particles. It is preferred that the first layer contain the heat shielding particles. It is preferred that the second layer contain the heat shielding particles. It is preferred that the third layer contain the heat shielding particles. The heat shielding particle is of a heat shielding substance. By the use of heat shielding particles, infrared rays (heat rays) can be effectively cut off. One kind of the heat shielding particles may be used alone, and two or more kinds thereof may be used in combination.

From the viewpoint of further enhancing the heat shielding property of the laminated glass, it is more preferred that the heat shielding particles be metal oxide particles. It is preferred that the heat shielding particle be a particle (a metal oxide particle) formed from an oxide of a metal.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

With regard to the interlayer film and laminated glass, from the viewpoint of further enhancing the heat shielding properties thereof, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

With regard to the interlayer film and laminated glass, from the viewpoint of further enhancing the heat shielding properties thereof, cesium-doped tungsten oxide particles are especially preferred. With regard to the interlayer film and laminated glass, from the viewpoint of still further enhancing the heat shielding properties thereof, it is preferred that the cesium-doped tungsten oxide particles be tungsten oxide particles represented by the formula: Cs_{0.33}WO₃.

The average particle diameter of the heat shielding particles is preferably 0.01 µm or more, more preferably 0.02 µm or more, and is preferably 0.1 µm or less, more preferably 0.05 µm or less. When the average particle diameter is the above lower limit or more, the heat ray shielding properties are sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of a layer containing the heat shielding particles (a first layer, a second layer, or a third layer), each content of the heat shielding particles (in particular, the content of tungsten oxide particles) is preferably 0.01% by weight or more, more preferably 0.1% by weight or more, further preferably 1% by weight or more, especially preferably 1.5% by weight or more. In 100% by weight of the interlayer film or in 100% by weight of a layer containing the heat shielding particles (a first layer, a second layer, or a third layer), each content of the heat shielding particles (in particular, the content of tungsten oxide particles) is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding property is sufficiently enhanced and the visible light transmittance is sufficiently enhanced.

### (Metal salt)

It is preferred that the interlayer film contain at least one kind of metal salt (hereinafter, sometimes described as Metal salt M) among an alkali metal salt, an alkaline earth metal salt, and a magnesium salt. It is preferred that the first layer contain the Metal salt M. It is preferred that the second layer contain the Metal salt M. It is preferred that the third layer contain the Metal salt M. By the use of the Metal salt M, controlling the adhesivity between the interlayer film and a lamination glass member such as a glass plate or the adhesivity between respective layers in the interlayer film is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt contained in the interlayer film contain at least one kind of metal between K and Mg.

Moreover, it is more preferred that the Metal salt M be an alkali metal salt of an organic acid with 2 to 16 carbon atoms, an alkaline earth metal salt of an organic acid with 2 to 16 carbon atoms, and a magnesium salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Examples of the magnesium carboxylate with 2 to 16 carbon atoms and the potassium carboxylate with 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in the interlayer film containing the Metal salt M or a layer containing the Metal salt M (a first layer, a second layer, or a third layer) is preferably 5 ppm or more, more preferably 10 ppm or more, further preferably 20 ppm or more, and is preferably 300 ppm or less, more preferably 250 ppm or less, further preferably 200 ppm or less. When the total of the contents of Mg and K is the above lower limit or more and the above upper limit or less, the adhesivity between the interlayer film and a lamination glass member or the adhesivity between respective layers in the interlayer film can be further well controlled.

### (Ultraviolet ray screening agent)

It is preferred that the interlayer film contain an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, even when the interlayer film and the laminated glass are used for a long period of time, the visible light transmittance becomes further hard to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray screening performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazin-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxalanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of the interlayer film or in 100% by weight of a layer containing the ultraviolet ray screening agent (a first layer, a second layer, or a third layer), the content of the ultraviolet ray screening agent is preferably 0.1% by weight or more, more preferably 0.2% by weight or more, further preferably 0.3% by weight or more, and especially preferably 0.5% by weight or more. In 100% by weight of the interlayer film or in 100% by weight of a layer containing the ultraviolet ray screening agent (a first layer, a second layer, or a third layer), the content of the ultraviolet ray screening agent is preferably 2.5% by weight or less, more preferably 2% by weight or less, further preferably 1% by weight or less, and especially preferably 0.8% by weight or less. When the content of the ultraviolet ray screening agent is the above-described lower limit or more and the above-described upper limit or less, deterioration in visible light transmittance after a lapse of a period of time can be further suppressed. In particular, by setting the content of the ultraviolet ray screening agent to be 0.2% by weight or more in 100% by weight of a layer containing the ultraviolet ray screening agent, with regard to the interlayer film and laminated glass, the lowering in visible light transmittance thereof after a lapse of a period of time can be significantly suppressed.

### (Oxidation inhibitor)

It is preferred that the interlayer film contain an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are preferably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis(4,6-di-t-butyl-1-phenyloxy)(2-ethylhexyloxy) phosphorus, and the like. One kind or two or more kinds among these oxidation inhibitors are preferably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

For maintaining high visible light transmittance of the interlayer film and the laminated glass over a long period of time, it is preferred that the content of the oxidation inhibitor be 0.1% by weight or more in 100% by weight of the interlayer film or in 100% by weight of a layer containing the oxidation inhibitor (a first layer, a second layer or a third layer). Moreover, since an effect commensurate with the addition of an oxidation inhibitor is not attained, it is preferred that the content of the oxidation inhibitor be 2% by weight or less in 100% by weight of the interlayer film or in 100% by weight of the layer containing the oxidation inhibitor.

### (Other ingredients)

Each of the interlayer film, the first layer, the second layer, and the third layer may contain additives such as a coupling agent, a dispersing agent, a surfactant, a flame retardant, an antistatic agent, a pigment, a dye, an adhesive force regulator other than metal salt, a moisture-resistance agent, a fluorescent brightening agent, and an infrared ray absorber, as necessary. One kind of these additives may be used alone, and two or more kinds thereof may be used in combination.

### (Other details of interlayer film)

The thickness of the interlayer film is not particularly limited. From the viewpoint of the practical aspect and the viewpoint of sufficiently enhancing the penetration resistance and the flexural rigidity of laminated glass, the thickness of the interlayer film is preferably 0.1 mm or more, more preferably 0.25 mm or more, and is preferably 3 mm or less, more preferably 1.5 mm or less. When the thickness of the interlayer film is the above lower limit or more, the penetration resistance and the flexural rigidity of laminated glass are further enhanced. When the thickness of the interlayer film is the above upper limit or less, the transparency of the interlayer film is further improved.

The interlayer film may be an interlayer film having a uniform thickness, or may be an interlayer film having varying thickness. The sectional shape of the interlayer film may be a rectangular shape and may be a wedge-like shape. The interlayer film may be wound, and the interlayer film may be made into a roll body. The roll body may include a winding core and an interlayer film wound on the outer periphery of the winding core.

The production method of the interlayer film according to the present invention is not particularly limited. In the case of a single-layered interlayer film, examples of the production method of the interlayer film according to the present invention include a method of extruding a resin composition with an extruder. As a method for producing the interlayer film according to the present invention, a method of separately forming resin compositions used for constituting respective layers into respective layers, and then layering the obtained layers, and a method of coextruding resin compositions used for constituting respective layers with an extruder to layer the layers can be recited in the case of a multi-layered interlayer film. A production method of extrusion-molding is preferred because the method is suitable for continuous production.

It is preferred that the second layer and the third layer contain the same polyvinyl acetal resin. This realizes excellent production efficiency of the interlayer film. For the reason of excellent production efficiency of the interlayer film, it is more preferred that the second layer and the third layer contain the same polyvinyl acetal resin and the same plasticizer. For the reason of excellent production efficiency of the interlayer film, it is further preferred that the second layer and the third layer be formed of the same resin composition.

It is preferred that the interlayer film have protrusions and recesses on at least one surface of the surfaces of both sides. It is more preferred that the interlayer film have protrusions and recesses on surfaces of both sides. Examples of the method for forming the protrusions and recesses include, but are not particularly limited to, a lip emboss method, an emboss roll method, a calender roll method, a profile extrusion method, and the like. The emboss roll method is preferred because a large number of embosses of the protrusions and recesses, which is a quantitatively constant protrusion and recess pattern, can be formed.

### (Laminated glass)

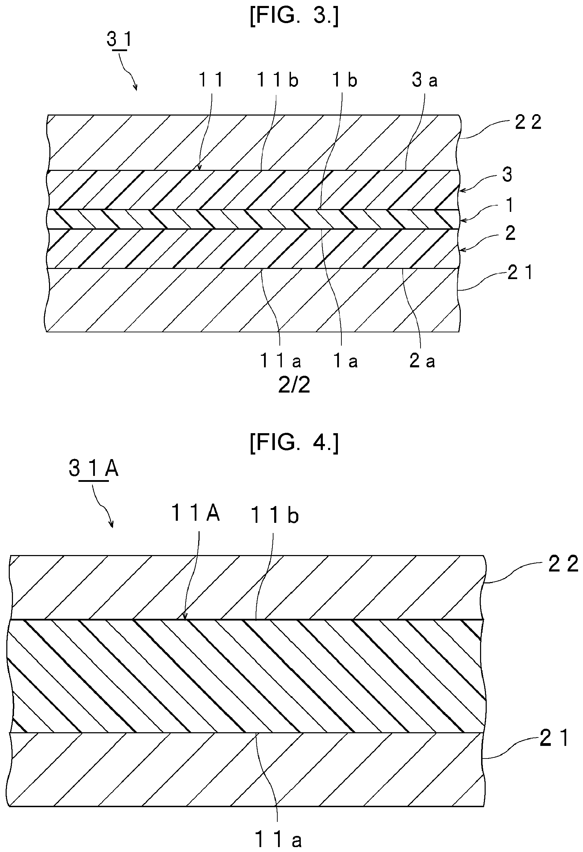

Fig. 3 is a sectional view showing an example of a laminated glass prepared with the interlayer film for laminated glass shown in Fig. 1.

A laminated glass 31 shown in Fig. 3 includes an interlayer film 11, a first lamination glass member 21, and a second lamination glass member 22. The interlayer film 11 is arranged between the first lamination glass member 21 and the second lamination glass member 22 to be sandwiched therebetween.

The first lamination glass member 21 is layered on a first surface 11a of the interlayer film 11. The second lamination glass member 22 is layered on a second surface 11b opposite to the first surface 11a of the interlayer film 11. The first lamination glass member 21 is layered on an outer surface 2a of the second layer 2. The second lamination glass member 22 is layered on an outer surface 3a of a third layer 3.

Fig. 4 is a sectional view schematically showing an example of a laminated glass prepared with the interlayer film shown in Fig. 2.

The laminated glass 31A shown in Fig. 4 is provided with a first lamination glass member 21, a second lamination glass member 22 and an interlayer film 11A. The interlayer film 11A is arranged between the first lamination glass member 21 and the second lamination glass member 22 to be sandwiched therebetween.

The first lamination glass member 21 is layered on a first surface 11a of the interlayer film 11A. The second lamination glass member 22 is layered on a second surface 11b opposite to the first surface 11a of the interlayer film 11A.

Examples of the lamination glass member include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate having a glass plate, and it is preferred that at least one glass plate be used. It is preferred that each of the first lamination glass member and the second lamination glass member be a glass plate or a PET (polyethylene terephthalate) film and the interlayer film include at least one glass plate as the first lamination glass member or the second lamination glass member. It is especially preferred that both of the first lamination glass member and the second lamination glass member be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

Although respective thicknesses of the first lamination glass member and the second lamination glass member are not particularly limited, the thickness is preferably 1 mm or more and is preferably 5 mm or less. When the lamination glass member is a glass plate, the thickness of the glass plate is preferably 1 mm or more and is preferably 5 mm or less. When the lamination glass member is a PET film, the thickness of the PET film is preferably 0.03 mm or more and is preferably 0.5 mm or less.

The method for producing the laminated glass is not particularly limited. First, the interlayer film is sandwiched between the first lamination glass member and the second lamination glass member to obtain a laminate. Then, for example, by passing the obtained laminate through pressure rolls or subjecting the obtained laminate to decompression suction in a rubber bag, the air remaining between the first lamination glass member and the interlayer film, and between the second lamination glass member and the interlayer film is removed. Then, the laminate is preliminarily bonded together at 70°C to 110°C to obtain a preliminarily press-bonded laminate. Next, by putting the preliminarily press-bonded laminate into an autoclave or by pressing the laminate, the laminate is press-bonded at 120°C to 150°C and under a pressure of 1 MPa to 1.5 MPa. In this way, laminated glass can be obtained.

The laminated glass can be used for automobiles, railway vehicles, aircraft, ships, buildings, and the like. It is preferred that the laminated glass be laminated glass for buildings or for vehicles and it is more preferred that the laminated glass be laminated glass for vehicles. The laminated glass can also be used for applications other than these applications. The laminated glass can be used for a windshield, side glass, rear glass, or roof glass of an automobile, and the like. The laminated glass is suitably used for automobiles.

Hereinafter, the present invention will be described in more detail with reference to examples and comparative examples. The present invention is not limited only to these examples.

In polyvinyl acetal resins used, n-butyraldehyde which has 4 carbon atoms is used for the acetalization. With regard to the polyvinyl acetal resin, the acetalization degree (the butyralization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

### (Example 1)

### Preparation of (meth)acryloyl polymer (1):

The following polymerization components were prepared.
(Meth)acryloyl monomer having an aromatic skeleton:
   Benzyl acrylate (VISCOAT #160, BzA, available from OSAKA ORGANIC CHEMICAL INDUSTRY LTD.) 5 parts by weight
(Meth)acryloyl monomer having an alicyclic skeleton:
   Isobornyl acrylate (IBOA, available from NIPPON SHOKUBAI CO., LTD.) 67 parts by weight
(Meth)acryloyl monomer having a cyclic ether skeleton:
   (2-methyl-2-ethyl-1,3-dioxolan-4-yl)methyl (meth)acrylate (MEDOL-10, available from OSAKA ORGANIC CHEMICAL INDUSTRY LTD.) 18 parts by weight

### Other monomer:

### Hydroxypropyl acrylate (HPA, available from OSAKA ORGANIC CHEMICAL INDUSTRY LTD.) 10 parts by weight

Benzyl acrylate, isobornyl acrylate, (2-methyl-2-ethyl-1,3-dioxolan-4-yl)methyl (meth)acrylate, hydroxypropyl acrylate, and Irgacure 184 (2,2-dimethoxy-1,2-diphenylethan-1-one, available from BASF Japan Ltd.) were mixed to obtain a mixture. Then in the condition that a spacer having a particle diameter of 100 µm was inserted at peripheral portion of two PET sheets (one-side mold-releasable, 50 µm thick, available from Nippa Corporation), the obtained mixture was poured between the two PET sheets to form a polymerizable composition layer. Then, the polymerizable composition layer was irradiated with ultraviolet rays at a dose of 3000 mJ/cm² with a chemical lamp, and then the two PET sheets were peeled off to obtain a (meth)acryloyl polymer (1).

### Preparation of composition for forming first layer:

The following ingredients were mixed, and kneaded sufficiently with a mixing roll to obtain a composition for forming a first layer.

### (Meth)acryloyl polymer (1) 100 parts by weight

An amount that is to be 0.2 % by weight in the obtained interlayer film of Tinuvin 326 (2-(2'-hydroxy-3'-t-butyl-5-methylphenyl)-5-chlorobenzotriazole, "Tinuvin 326" available from BASF Japan Ltd.)

An amount that is to be 0.2% by weight in the obtained interlayer film of BHT (2,6-di-t-butyl-p-cresol)

### Preparation of composition for forming second layer and third layer:

The following ingredients were mixed, and kneaded sufficiently with a mixing roll to obtain a composition for forming a second layer and a third layer. Other ingredients were added to the polyvinyl acetal resin.

Polyvinyl acetal resin (2) (content of hydroxyl group: 30.5% by mole, acetylation degree: 1% by mole, acetalization degree: 68.5% by mole) 100 parts by weight
Triethylene glycol di-2-ethylhexanoate (3GO) 35 parts by weight
Tinuvin 326 (2-(2'-hydroxy-3'-t-butyl-5-methylphenyl)-5-chlorobenzotriazole, "Tinuvin 326" available from BASF Japan Ltd.) 0.2 parts by weight
BHT (2,6-di-t-butyl-p-cresol) 0.2 parts by weight

### Preparation of interlayer film:

By coextruding the composition for forming a first layer and a composition for forming a second layer and a third layer using a coextruder, an interlayer film (860 µm in thickness) having a laminate structure of a second layer (380 µm in thickness)/a first layer (100 µm in thickness)/a third layer (380 µm in thickness) was prepared.

### Preparation of laminated glass:

The obtained interlayer film was cut into a size of 30 cm long × 2.5 cm wide. As the first lamination glass member, and the second lamination glass member, two glass plates (clear glass, 30 cm long × 2.5 cm wide × 2.0 mm thick) were prepared. The interlayer film was sandwiched between the two glass plates to obtain a laminate. The laminate was put into a rubber bag and the inside thereof was degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave, and then stored in a constant-temperature, constant-humidity room at 23°C and 30%RH for two months to obtain a laminated glass.

### (Example 2)

### Preparation of (meth)acryloyl polymer (2):

The following polymerization components were prepared.
(Meth)acryloyl monomer having an aromatic skeleton:
   Benzyl acrylate (VISCOAT #160, BzA, available from OSAKA ORGANIC CHEMICAL INDUSTRY LTD.) 15 parts by weight
(Meth)acryloyl monomer having an alicyclic skeleton:
   Isobornyl acrylate (IBOA, available from NIPPON SHOKUBAI CO., LTD.) 27 parts by weight
(Meth)acryloyl monomer having a cyclic ether skeleton:
   (2-methyl-2-ethyl-1,3-dioxolan-4-yl)methyl (meth)acrylate (MEDOL-10, available from OSAKA ORGANIC CHEMICAL INDUSTRY LTD.) 18 parts by weight
Other monomer:
   Hydroxypropyl acrylate (HPA, available from OSAKA ORGANIC CHEMICAL INDUSTRY LTD.) 20 parts by weight
   Methyl methacrylate (MMA, available from Sumitomo Chemical Co., Ltd.) 20 parts by weight

The (meth)acryloyl polymer (2) was obtained in the same manner as that in Example 1 except that the above polymerization components were mixed to obtain a mixture.

### Preparation of composition for forming first layer:

A composition for forming a first layer was obtained in the same manner as that in Example 1 except that the (meth)acryloyl polymer (1) was changed to the (meth)acryloyl polymer (2), and 5 parts by weight of triethyleneglycol di-2-ethylhexanoate (3GO) was mixed.

### Preparation of composition for forming second layer and third layer:

A composition for forming a second layer and a third layer was obtained in the same manner as that in Example 1.

### Preparation of interlayer film:

An interlayer film (860 µm thick) having a laminate structure of the second layer (380 µm thick)/the first layer (100 µm thick)/the third layer (380 µm thick) was prepared in the same manner as that in Example 1.

### Preparation of laminated glass:

A laminated glass was prepared in the same manner as that in Example 1.

### (Example 3)

### Preparation of (meth)acryloyl polymer (3):

The following polymerization components were prepared.
(Meth)acryloyl monomer having an alicyclic skeleton:
   Isobornyl acrylate (IBOA, available from NIPPON SHOKUBAI CO., LTD.) 70 parts by weight
(Meth)acryloyl monomer having a cyclic ether skeleton:
   (2-methyl-2-ethyl-1,3-dioxolan-4-yl)methyl (meth)acrylate (MEDOL-10, available from OSAKA ORGANIC CHEMICAL INDUSTRY LTD.) 30 parts by weight

The (meth)acryloyl polymer (3) was obtained in the same manner as that in Example 1 except that the above polymerization components were mixed to obtain a mixture.

### Preparation of composition for forming first layer:

A composition for forming a first layer was obtained in the same manner as that in Example 1 except that the (meth)acryloyl polymer (1) was changed to the (meth)acryloyl polymer (3), and 38 parts by weight of triethyleneglycol di-2-ethylhexanoate (3GO) was mixed.

### Preparation of composition for forming second layer and third layer:

A composition for forming a second layer and a third layer was obtained in the same manner as that in Example 1 except that the mixing amount of 3GO was changed to 30 parts by weight.

### Preparation of interlayer film:

An interlayer film (860 µm thick) having a laminate structure of the second layer (380 µm thick)/the first layer (100 µm thick)/the third layer (380 µm thick) was prepared in the same manner as that in Example 1.

### Preparation of laminated glass:

A laminated glass was prepared in the same manner as that in Example 1.

### (Example 4)

### Preparation of (meth)acryloyl polymer (4):

The following polymerization components were prepared.
(Meth)acryloyl monomer having an aromatic skeleton:
   Benzyl acrylate (VISCOAT #160, BzA, available from OSAKA ORGANIC CHEMICAL INDUSTRY LTD.) 5 parts by weight
(Meth)acryloyl monomer having an alicyclic skeleton:
   Isobornyl acrylate (IBOA, available from NIPPON SHOKUBAI CO., LTD.) 70 parts by weight
(Meth)acryloyl monomer having a cyclic ether skeleton:
   (2-methyl-2-ethyl-1,3-dioxolan-4-yl)methyl (meth)acrylate (MEDOL-10, available from OSAKA ORGANIC CHEMICAL INDUSTRY LTD.) 20 parts by weight
   Cyclic trimethylolpropane formal acrylate (VISCOAT#200, CTFA, available from OSAKA ORGANIC CHEMICAL INDUSTRY LTD.) 5 parts by weight

The (meth)acryloyl polymer (4) was obtained in the same manner as that in Example 1 except that the above polymerization components were mixed to obtain a mixture.

### Preparation of composition for forming first layer:

A composition for forming a first layer was obtained in the same manner as that in Example 1 except that the (meth)acryloyl polymer (1) was changed to the (meth)acryloyl polymer (4), and 38 parts by weight of triethyleneglycol di-2-ethylhexanoate (3GO) was mixed.

### Preparation of composition for forming second layer and third layer:

A composition for forming a second layer and a third layer was obtained in the same manner as that in Example 1 except that the mixing amount of 3GO was changed to 30 parts by weight.

### Preparation of interlayer film:

An interlayer film (860 µm thick) having a laminate structure of the second layer (380 µm thick)/the first layer (100 µm thick)/the third layer (380 µm thick) was prepared in the same manner as that in Example 1.

### Preparation of laminated glass:

A laminated glass was prepared in the same manner as that in Example 1.

### (Example 5)

### Preparation of (meth)acryloyl polymer (5):

The following polymerization components were prepared.
(Meth)acryloyl monomer having an aromatic skeleton:
   Benzyl acrylate (VISCOAT #160, BzA, available from OSAKA ORGANIC CHEMICAL INDUSTRY LTD.) 10 parts by weight
(Meth)acryloyl monomer having an alicyclic skeleton:
   Isobornyl acrylate (IBOA, available from NIPPON SHOKUBAI CO., LTD.) 60 parts by weight
(Meth)acryloyl monomer having a cyclic ether skeleton:
   Cyclic trimethylolpropane formal acrylate (VISCOAT#200, CTFA, available from OSAKA ORGANIC CHEMICAL INDUSTRY LTD.) 5 parts by weight
Other monomer:
   Butyl acrylate (AB, available from NIPPON SHOKUBAI CO., LTD.) 5 parts by weight
   Dimethyl acrylamide (DMAA, available from KJ Chemicals Corporation) 20 parts by weight

The (meth)acryloyl polymer (5) was obtained in the same manner as that in Example 1 except that the above polymerization components were mixed to obtain a mixture.

### Preparation of composition for forming first layer:

A composition for forming a first layer was obtained in the same manner as that in Example 1 except that the (meth)acryloyl polymer (1) was changed to the (meth)acryloyl polymer (5), and 50 parts by weight of triethyleneglycol di-2-ethylhexanoate (3GO) was mixed.

### Preparation of composition for forming second layer and third layer:

A composition for forming a second layer and a third layer was obtained in the same manner as that in Example 1 except that the mixing amount of 3GO was changed to 30 parts by weight.

### Preparation of interlayer film:

An interlayer film (860 µm thick) having a laminate structure of the second layer (380 µm thick)/the first layer (100 µm thick)/the third layer (380 µm thick) was prepared in the same manner as that in Example 1.

### Preparation of laminated glass:

A laminated glass was prepared in the same manner as that in Example 1.

### (Example 6)

### Preparation of (meth)acryloyl polymer (6):

The following polymerization components were prepared.
(Meth)acryloyl monomer having an aromatic skeleton:
   Benzyl acrylate (VISCOAT #160, BzA, available from OSAKA ORGANIC CHEMICAL INDUSTRY LTD.) 5 parts by weight
(Meth)acryloyl monomer having an alicyclic skeleton:
   Isobornyl acrylate (IBOA, available from NIPPON SHOKUBAI CO., LTD.) 60 parts by weight
Other monomer:
   Butyl acrylate (AB, available from NIPPON SHOKUBAI CO., LTD.) 10 parts by weight
   Dimethyl acrylamide (DMAA, available from KJ Chemicals Corporation) 25 parts by weight

The (meth)acryloyl polymer (6) was obtained in the same manner as that in Example 1 except that the above polymerization components were mixed to obtain a mixture.

### Preparation of composition for forming first layer:

A composition for forming a first layer was obtained in the same manner as that in Example 1 except that the (meth)acryloyl polymer (1) was changed to the (meth)acryloyl polymer (6), and 50 parts by weight of triethyleneglycol di-2-ethylhexanoate (3GO) was mixed.

### Preparation of composition for forming second layer and third layer:

A composition for forming a second layer and a third layer was obtained in the same manner as that in Example 1 except that the mixing amount of 3GO was changed to 30 parts by weight.

### Preparation of interlayer film:

An interlayer film (860 µm thick) having a laminate structure of the second layer (380 µm thick)/the first layer (100 µm thick)/the third layer (380 µm thick) was prepared in the same manner as that in Example 1.

### Preparation of laminated glass:

A laminated glass was prepared in the same manner as that in Example 1.

### (Example 7)

### Preparation of (meth)acryloyl polymer (7):

The following polymerization components were prepared.
(Meth)acryloyl monomer having an alicyclic skeleton:
   Isobornyl acrylate (IBOA, available from NIPPON SHOKUBAI CO., LTD.) 70 parts by weight
(Meth)acryloyl monomer having a cyclic ether skeleton:
   (2-methyl-2-ethyl-1,3-dioxolan-4-yl)methyl (meth)acrylate (MEDOL-10, available from OSAKA ORGANIC CHEMICAL INDUSTRY LTD.) 7 parts by weight
   Cyclic trimethylolpropane formal acrylate (VISCOAT#200, CTFA, available from OSAKA ORGANIC CHEMICAL INDUSTRY LTD.) 20 parts by weight
Other monomer:
   Acrylic acid (available from NIPPON SHOKUBAI CO., LTD.) 3 parts by weight

The mixture of the (meth) acryloyl polymer (7) and the polyvinyl acetal resin (1) was obtained in the same manner as that in Example 1 except that the polymerization components and 7 parts by weight of the polyvinyl acetal resin (1) (content of hydroxyl group: 24.2% by mole, acetylation degree: 11.7% by mole, acetalization degree: 64.1% by mole) were mixed to obtain a mixture.

### Preparation of composition for forming first layer:

A composition for forming a first layer was obtained in the same manner as that in Example 1 except that the (meth)acryloyl polymer (1) was changed to a mixture of the (meth)acryloyl polymer (7) and the polyvinyl acetal resin (1), and 50 parts by weight of triethyleneglycol di-2-ethylhexanoate (3GO) was mixed.

### Preparation of composition for forming second layer and third layer:

A composition for forming a second layer and a third layer was obtained in the same manner as that in Example 1 except that the mixing amount of 3GO was changed to 30 parts by weight.

### Preparation of interlayer film:

An interlayer film (860 µm thick) having a laminate structure of the second layer (380 µm thick)/the first layer (100 µm thick)/the third layer (380 µm thick) was prepared in the same manner as that in Example 1.

### Preparation of laminated glass:

A laminated glass was prepared in the same manner as that in Example 1.

### (Comparative Example 1)

### Preparation of (meth)acryloyl polymer (X1):

The following polymerization components were prepared.

### Other monomer:

Butyl acrylate (AB, available from NIPPON SHOKUBAI CO., LTD.) 78.4 parts by weight
Ethyl acrylate (EA, available from NIPPON SHOKUBAI CO., LTD.) 19.6 parts by weight
Acrylic acid (available from NIPPON SHOKUBAI CO., LTD.) 2 parts by weight

The (meth)acryloyl polymer (X1) was obtained in the same manner as that in Example 1 except that the above polymerization components were mixed to obtain a mixture.

### Preparation of composition for forming first layer:

A composition for forming a first layer was obtained in the same manner as that in Example 1 except that the (meth)acryloyl polymer (1) was changed to the (meth)acryloyl polymer (X1).

### Preparation of composition for forming second layer and third layer:

A composition for forming a second layer and a third layer was obtained in the same manner as that in Example 1.

### Preparation of interlayer film:

An interlayer film (860 µm thick) having a laminate structure of the second layer (380 µm thick)/the first layer (100 µm thick)/the third layer (380 µm thick) was prepared in the same manner as that in Example 1.

### Preparation of laminated glass:

A laminated glass was prepared in the same manner as that in Example 1.

### (Comparative Example 2)

### Preparation of (meth)acryloyl polymer(X2):

The following polymerization components were prepared.
(Meth)acryloyl monomer having an aromatic skeleton:
   Benzyl acrylate (VISCOAT #160, BzA, available from OSAKA ORGANIC CHEMICAL INDUSTRY LTD.) 5 parts by weight
(Meth)acryloyl monomer having an alicyclic skeleton:
   Isobornyl acrylate (IBOA, available from NIPPON SHOKUBAI CO., LTD.) 20 parts by weight
(Meth)acryloyl monomer having a cyclic ether skeleton:
   (2-methyl-2-ethyl-1,3-dioxolan-4-yl)methyl (meth)acrylate (MEDOL-10, available from OSAKA ORGANIC CHEMICAL INDUSTRY LTD.) 10 parts by weight
Other monomer:
   Hydroxypropyl acrylate (HPA, available from OSAKA ORGANIC CHEMICAL INDUSTRY LTD.) 30 parts by weight
   Methyl methacrylate (MMA, available from Sumitomo Chemical Co., Ltd.) 35 parts by weight

The (meth)acryloyl polymer (X2) was obtained in the same manner as that in Example 1 except that the above polymerization components were mixed to obtain a mixture.

### Preparation of composition for forming first layer:

A composition for forming a first layer was obtained in the same manner as that in Example 1 except that the (meth)acryloyl polymer (1) was changed to the (meth)acryloyl polymer (X2), and 5 parts by weight of triethyleneglycol di-2-ethylhexanoate (3GO) was mixed.

### Preparation of composition for forming second layer and third layer:

A composition for forming a second layer and a third layer was obtained in the same manner as that in Example 1.

### Preparation of interlayer film:

An interlayer film (860 µm thick) having a laminate structure of the second layer (380 µm thick)/the first layer (100 µm thick)/the third layer (380 µm thick) was prepared in the same manner as that in Example 1.

### Preparation of laminated glass:

A laminated glass was prepared in the same manner as that in Example 1.

### (Comparative Example 3)

### Preparation of composition for forming first layer:

The following ingredients were mixed, and kneaded sufficiently with a mixing roll to obtain a composition for forming a first layer. Other ingredients were added to the polyvinyl acetal resin.

Polyvinyl acetal resin (1) (content of hydroxyl group: 24.2% by mole, acetylation degree: 11.7% by mole, acetalization degree: 64.1% by mole) 100 parts by weight
Triethylene glycol di-2-ethylhexanoate (3GO) 75 parts by weight
An amount that is to be 0.2 % by weight in the obtained interlayer film of Tinuvin 326 (2-(2'-hydroxy-3'-t-butyl-5-methylphenyl)-5-chlorobenzotriazole, "Tinuvin 326" available from BASF Japan Ltd.)
An amount that is to be 0.2% by weight in the obtained interlayer film of BHT (2,6-di-t-butyl-p-cresol)

### Preparation of composition for forming second layer and third layer:

A composition for forming a second layer and a third layer was obtained in the same manner as that in Example 1 except that the mixing amount of 3GO was changed to 38 parts by weight.

### Preparation of interlayer film:

An interlayer film (860 µm thick) having a laminate structure of the second layer (380 µm thick)/the first layer (100 µm thick)/the third layer (380 µm thick) was prepared in the same manner as that in Example 1.

### Preparation of laminated glass:

A laminated glass was prepared in the same manner as that in Example 1.

### (Comparative Example 4)

In a reaction vessel equipped with a thermometer, a stirrer, a nitrogen introducing tube, and a condenser, 10 parts by weight of the polyvinyl acetal resin (1), 6.6 parts by weight of ethyl acrylate, 6 parts by weight of benzyl acrylate, 9 parts by weight of 2-hydroxyethyl acrylate, 8.4 parts by weight of butyl acrylate, and 65 parts by weight of ethyl acetate which is a polymerization solvent were added. The polyvinyl acetal resin (1) was dissolved while these ingredients were stirred. Then, after replacing inside the reaction vessel with nitrogen by blowing nitrogen gas into the reaction vessel for 30 minutes, the reaction vessel was heated to 85°C while the inside of the reaction vessel was stirred. After heating for 30 minutes, a polymerization initiator solution prepared by diluting 0.1 parts by weight of t-butyl peroxy-2-ethylhexanoate which is a polymerization initiator in 5 parts by weight of ethyl acetate was added dropwise into the reaction vessel over 3 hours. Then, the reaction was caused for another 3 hours at 85°C. Then, the reaction solution was cooled. The obtained solution was diluted in a diluting solvent (mixed solvent of methanol and toluene, methanol : toluene = 1 : 2 (weight ratio)) to obtain a solution having a solid content of 20% by weight. Then, the obtained solution was applied on a release-treated PET film, and dried at 80°C for 1 hour to obtain a film formed of a polyvinyl acetal resin composition. The obtained film was sufficiently kneaded with a mixing roll to obtain a composition for forming a first layer.

### Preparation of composition for forming second layer and third layer:

A composition for forming a second layer and a third layer was obtained in the same manner as that in Example 1 except that the mixing amount of 3GO was changed to 30 parts by weight.

### Preparation of interlayer film:

An interlayer film (760 µm thick) having a laminate structure of the second layer (330 µm thick)/the first layer (100 µm thick)/the third layer (330 µm thick) was prepared in the same manner as that in Example 1.

### Preparation of laminated glass:

A laminated glass was prepared in the same manner as that in Example 1.

### (Evaluation)

### (1) Glass transition temperature of homopolymer of cyclic skeleton-containing (meth)acryloyl monomer

A homopolymer of the used cyclic skeleton-containing (meth)acryloyl monomer was synthesized, and a resin film of the homopolymer was obtained. The obtained resin film was stored in an environment of room temperature of 23 ± 2°C and a humidity of 25 ± 5% for 12 hours, and directly after the storage, viscoelasticity was measured with "ARES-G2" available from TA Instruments. Glass transition temperature was measured under the condition in which the temperature was decreased from 200°C to -50°C at a temperature decreasing rate of 3°C/min. and under the condition of a frequency of 1 Hz and a strain of 1% by using a parallel plate with a diameter of 8 mm as a jig.

Glass transition temperature of a homopolymer of each cyclic skeleton-containing (meth)acryloyl monomer was as follows.

Glass transition temperature of a homopolymer of benzyl acrylate: 19°C
Glass transition temperature of a homopolymer of isobornyl acrylate: 107°C
Glass transition temperature of a homopolymer of (2-methyl-2-ethyl-1,3-dioxolan-4-yl)methyl (meth)acrylate: 4°C
Glass transition temperature of a homopolymer of cyclic trimethylolpropane formal acrylate: 27°C

### (2) Sound insulating property (primary loss factor at 20°C and 15°C)

The obtained laminated glass was excited with a vibration generator for damping test ("Vibrator G21-005D" available from Shinken. Co., Ltd.). The resultant vibration characteristic was amplified with a mechanical impedance measuring device ("XG-81" available from RION Co., Ltd.), and the vibration spectrum was analyzed with an FFT spectrum analyzer ("FFT analyzer SA-01A2" available from RION Co., Ltd.) to determine a primary loss factor at 20°C and a primary loss factor at 15°C.

### (3) Adhesive force

The composition for forming a first layer was dissolved in tetrahydrofuran, and applied on a corona-treated PET film (70 µm in thickness), and then dried at 100°C for 30 minutes to form a first layer having a thickness of 100 µm, and thus a first laminate having a two-layer structure of the PET film and the first layer was obtained.

By molding the composition for forming a second layer and a third layer to have a thickness of 380 µm with a pressing machine, a second layer (also corresponding to a third layer) was obtained.

Each of the obtained first laminate and the obtained second layer was cut into a size of 25 mm × 80 mm, and lamination at 110°C was conducted while the first layer and the second layer face each other. A test sample of PET film/first layer/second layer was obtained.

For the obtained test sample, a 180-degrees peel test was conducted at 25°C in the condition of a tensile speed of 300 mm/min. using a tensile tester, and adhesive force between the first layer and the second layer (also corresponding to the third layer) was evaluated.

### [Criteria for judgment in adhesive force]

○: 8 N/25 mm or more
○: 2 N/25 mm or more and less than 8 N/25 mm
×: less than 2 N/25 mm

The details and the results are shown in the following Tables 1, 2.

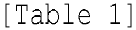

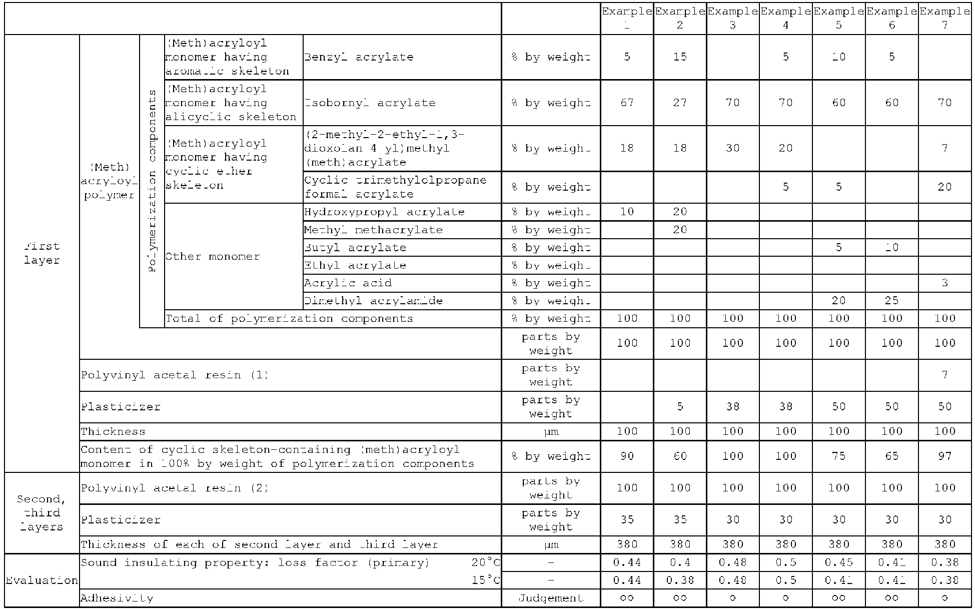

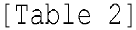

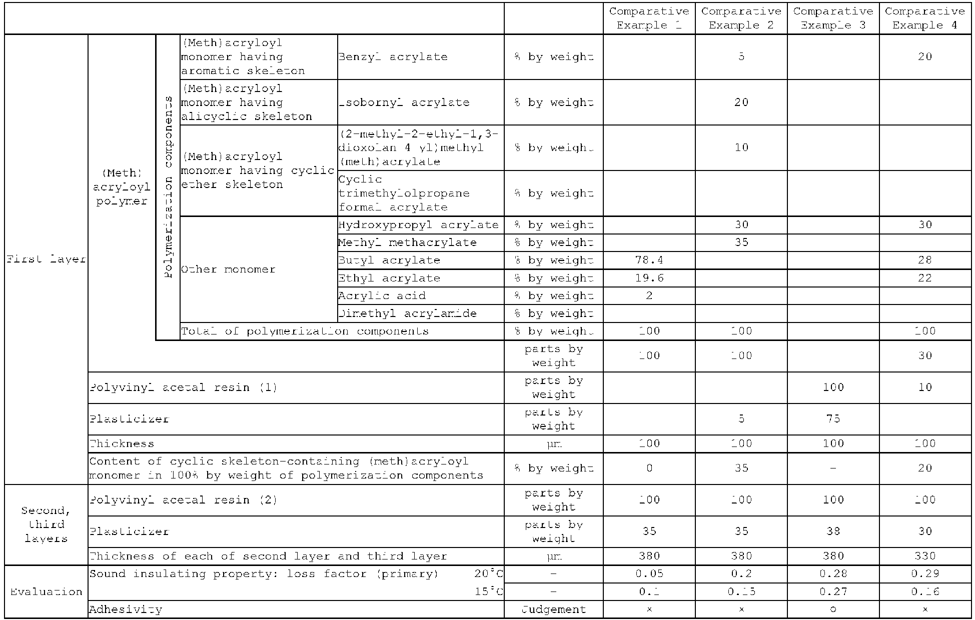

### (Evaluation of single-layered interlayer film)

For a single-layered interlayer film, the same evaluation as for the multilayered interlayer film was conducted. Each of the interlayer films of Examples 8 to 11 is a single-layered interlayer film having a first layer with the same composition as that in Examples 1 to 4. Each of the interlayer films of Comparative Examples 5 to 7 is a single-layered interlayer film having a first layer with the same composition as that in Comparative Examples 1 to 3. Therefore, the interlayer films of Examples 8 to 11 were excellent in sound insulating property in comparison with the interlayer films of Comparative Examples 5 to 7.

Also, each of the interlayer films (first layer) of Examples 8 to 11 and Comparative Examples 5 to 7 was cut into a size of 25 mm long × 80 mm wide. The cut first layer, and a glass plate (clear glass) having a size of 25 mm long × 50 mm wide were laminated at 110°C while the first layer and the glass plate face each other to obtain a test sample. For the obtained test sample, a 180-degrees peel test was conducted at 25°C in the condition of a tensile speed of 300 mm/min. using a tensile tester, and adhesive force between the first layer and the glass plate was measured. The adhesive force between the first layer and the glass plate in the test samples prepared with the interlayer films of Examples 8 to 11 was higher than the adhesive force between the first layer and the glass plate in the test samples prepared with the interlayer films of Comparative Examples 5 to 7.

### EXPLANATION OF SYMBOLS

- 1:: First layer
- 1a:: First surface
- 1b:: Second surface
- 2:: Second layer
- 2a:: Outer surface
- 3:: Third layer
- 3a:: Outer surface
- 11:: Interlayer film
- 11A:: Interlayer film (first layer)
- 11a:: First surface
- 11b:: Second surface
- 21:: First lamination glass member
- 22:: Second lamination glass member
- 31:: Laminated glass
- 31A:: Laminated glass

## Claims

1. An interlayer film for laminated glass having a one-layer or two or more-layer structure,
the interlayer film comprising a first layer containing a (meth)acryloyl polymer prepared by polymerizing polymerization components including at least one kind of cyclic skeleton-containing (meth)acryloyl monomer selected from the group consisting of a (meth)acryloyl monomer having an aromatic skeleton, a (meth)acryloyl monomer having an alicyclic skeleton and a (meth)acryloyl monomer having a cyclic ether skeleton,
the interlayer film having a content of the cyclic skeleton-containing (meth)acryloyl monomer of 50% by weight or more in 100% by weight of the polymerization components.

2. The interlayer film for laminated glass according to claim 1, wherein the polymerization components include at least two kinds of cyclic skeleton-containing (meth)acryloyl monomers selected from the group consisting of the (meth)acryloyl monomer having an aromatic skeleton, the (meth)acryloyl monomer having an alicyclic skeleton, and the (meth)acryloyl monomer having a cyclic ether skeleton.

3. The interlayer film for laminated glass according to claim 1, wherein the polymerization components include at least one kind of cyclic skeleton-containing (meth)acryloyl monomer selected from the group consisting of the (meth)acryloyl monomer having an alicyclic skeleton, and the (meth)acryloyl monomer having a cyclic ether skeleton.

4. The interlayer film for laminated glass according to any one of claims 1 to 3, wherein the first layer contains a plasticizer.

5. The interlayer film for laminated glass according to any one of claims 1 to 4, wherein
the interlayer film includes a second layer, and
the second layer is layered on a first surface of the first layer.

6. The interlayer film for laminated glass according to claim 5, wherein the second layer contains a thermoplastic resin.

7. The interlayer film for laminated glass according to claim 5 or 6, wherein the second layer contains a plasticizer.

8. The interlayer film for laminated glass according to any one of claims 5 to 7, wherein
the interlayer film includes a third layer, and
the third layer is layered on a second surface opposite to the first surface of the first layer.

9. The interlayer film for laminated glass according to claim 8, wherein the third layer contains a thermoplastic resin.

10. The interlayer film for laminated glass according to claim 8 or 9, wherein the third layer contains a plasticizer.

11. A laminated glass comprising:
a first lamination glass member;
a second lamination glass member; and
the interlayer film for laminated glass according to any one of claims 1 to 10,
the interlayer film for laminated glass being arranged between the first lamination glass member and the second lamination glass member.
